# EUROPEAN PATENT APPLICATION

(11) **EP 2 404 497 A1**
(43) Date of publication of application: **11.01.2012**
(21) Application number: 10748684.7
(22) Date of filing: 26.02.2010
(51) Int. Cl.: A01G 9/00

(54) **PLANTER SUPPORT FRAME APPARATUS**

(30) Priority: 06.03.2009 JP 2009053622
(71) Applicant: Otsubo, Teruto, Ichikawa-shi, Chiba 272-0824 (JP)
(72) Inventor: Otsubo, Teruto, Ichikawa-shi, Chiba 272-0824 (JP)
(74) Representative: Geyer, Fehners & Partner
(86) International application number: PCT/JP2010/053107
(87) International publication number: WO 2010/101089

(57) **Abstract**

Provided is a planter support frame apparatus in which a strong green-planted artificial ground can be formed with a simple structure and a high construction freedom. The planter support frame apparatus includes: support plate members which are provided on a plurality of support bars and each include fitting-subject coupling portions on side surfaces thereof; and coupling members each including, at both ends thereof, fitting coupling portions detachably fitted to the support plate members. The coupling members form, together with the support plate members, at least one support frame body having a support space amid the coupling members and the support plate members. The at least one support frame body supports a support flange from below by accommodating a planter body in the support space. A plurality of support frame bodies may be continuously arranged vertically and horizontally, and thus the green-planted artificial ground, which has a simple structure and can be easily constructed and reliably supported on various support substrates, and further, onto which people can step, can be provided.

## Description

### Technical Field

The present invention relates to a planter support frame apparatus, and more particularly, to a planter support frame apparatus for arranging plant culture containers such as planters in rows and columns and supporting the same. In the present invention, the "planter" represents a plant culture container, which is suited for sustaining vegetation or for accommodating plants, such as what is called a planter, a plant pot, and a culture pot.

### Background Art

In recent years, attention has been drawn to rooftop greening. There have been many problems with the rooftop greening, such as waterproofing, irrigation, root prevention, and weight reduction, and rather high cost is required to solve those problems. Further, for greening existing balconies of high-rise apartment buildings, large-scale construction is required to solve the above-mentioned problems. As a simple system with which rooftop greening can be performed with respect to existing buildings without the large-scale construction, there has been proposed a method of arraying and arranging planters on a rooftop. Further, in spite of high demand therefor, greening of a folded-plate roof and the like has not yet been put into practical use at present owing to the many above-mentioned problems to be solved.

For example, Patent Literature 1 proposes a rooftop-greening system in which dish-like planters are merely placed on a rooftop while being connected to each other and arranged in four directions.

Further, Patent Literature 2 proposes a plant-culture panel member formed of a metal net panel expanded around a planter so that a vine plant from the planter extends along the panel, and a plant culture apparatus.

Still further, Patent Literature 3 proposes a greening system in which planters are housed in groove parts of a folded-plate roof and fixed thereto.

### Citation List

### Patent Literature

Patent Literature 1: JP 2004-147593 A
Patent Literature 2: JP 2004-97144 A
Patent Literature 3: JP 2000-262152 A

### Summary of Invention

### Technical Problems

Of those conventional rooftop-greening systems as described above, in the system in which the planters are merely placed on the rooftop, the planters are moved in some cases due to various factors. In addition, people cannot step on the planters. Also in the system in which the net panel is extended from the planter so that the plant twines along the same, functions of an artificial ground cannot be exerted, and people cannot step on the planter. In addition, the planter is not fixed, and hence has a risk of moving. In the system in which the planters are supported with use of the groove parts of the folded-plate roof, the planters are relatively satisfactorily supported. However, it is difficult to cover furrow parts of the folded-plate roof by planting, and hence the planters and fixing fittings must be prepared in conformity with dimensions and shapes of the folded-plate roof.

It is therefore an object of the present invention to provide a planter support frame apparatus capable of reliably supporting planters on support substrates of various types with a simple structure, substantially completely covering a surface of the support substrate irrespective of a planar shape of the surface, and forming a green-planted artificial ground onto which people can step.

### Solution to Problem

The present invention provides a planter support frame apparatus for accommodating and holding planter containers each having a support flange provided to an outer peripheral portion of a container body, the planter support frame apparatus including: a plurality of support bars arranged on a support substrate; flat-plate-like support plate members provided on the plurality of support bars at a height position of being separated from the support substrate, and each including fitting-subject coupling portions on side surfaces of each of the flat-plate-like support plate members; and coupling members each including, at both ends thereof, fitting coupling portions detachably fitted to the fitting-subject coupling portions of the flat-plate-like support plate members, the coupling members coupling the flat-plate-like support plate members to each other at the height position so as to support the flat-plate-like support plate members in a horizontal direction, the coupling members forming at least one support frame body together with the flat-plate-like support plate members, the coupling members supporting the support flange of each of the planters by accommodating the container body of each of the planters in a support space formed amid the coupling members and the flat-plate-like support plate members, in which the at least one support frame body includes a plurality of support frame bodies capable of being continuously arranged in rows and columns.

### Advantageous Effects of Invention

According to the planter support frame apparatus of the present invention, the planter support frame apparatus is capable of reliably supporting planters on support substrates of various types with a simple structure, substantially completely covering a surface of the support substrate irrespective of a planar shape of the surface, and forming a green-planted artificial ground onto which people can step.

### Brief Description of Drawings

[FIG. 1] A schematic perspective view illustrating a first embodiment of a planter support frame apparatus of the present invention. (Embodiment 1)
[FIG. 2] A schematic plan view of the planter support frame apparatus of FIG. 1. (Embodiment 1)
[FIG. 3] A schematic perspective view of a planter usable with the planter support frame apparatus of FIG. 1. (Embodiment 1)
[FIG. 4] An exploded perspective view illustrating coupling in a support frame body of the planter support frame apparatus of FIG. 1. (Embodiment 1)
[FIG. 5] A schematic plan view illustrating one of the support frame bodies of the planter support frame apparatus of FIG. 1. (Embodiment 1)
[FIG. 6] An exploded plan view of the support frame body of FIG. 5. (Embodiment 1)
[FIG. 7] A side view of the support frame body of FIG. 6. (Embodiment 1)
[FIG. 8] A schematic perspective view of a riser usable in the planter support frame apparatus of FIG. 1. (Embodiment 1)
[FIG. 9] A schematic plan view illustrating a second embodiment of the planter support frame apparatus of the present invention. (Embodiment 2)
[FIG. 10] A schematic plan view of a long support plate member of FIG. 9. (Embodiment 2)
[FIG. 11] A schematic side view of the support plate member of FIG. 9. (Embodiment 2)
[FIG. 12] A schematic perspective view illustrating a third embodiment of the planter support frame apparatus of the present invention. (Embodiment 3)
[FIG. 13] A schematic side view of a coupling member in a fourth embodiment of the planter support frame apparatus of the present invention. (Embodiment 4)
[FIG. 14] A schematic side view illustrating a case where support bars in a fifth embodiment of the planter support frame apparatus of the present invention are different from each other in length. (Embodiment 5)
[FIG. 15] A schematic side view illustrating an example of a support-bar fixing method in a sixth embodiment of the planter support frame apparatus of the present invention. (Embodiment 6)
[FIG. 16] A schematic side view illustrating another example of the support-bar fixing method in a seventh embodiment of the planter support frame apparatus of the present invention. (Embodiment 7)
[FIG. 17] A schematic plan view illustrating a planter support form in an eighth embodiment of the planter support frame apparatus of the present invention. (Embodiment 8)
[FIG. 18] A sectional view taken along the line XVIII-XVIII of FIG. 17. (Embodiment 8)
[FIG. 19] A schematic plan view illustrating a planter support form in a ninth embodiment of the planter support frame apparatus of the present invention. (Embodiment 9)
[FIG. 20] A sectional view taken along the line XX-XX of FIG. 19. (Embodiment 9)

### Description of Embodiments

In the following, description is made of embodiments of the present invention.

### First embodiment

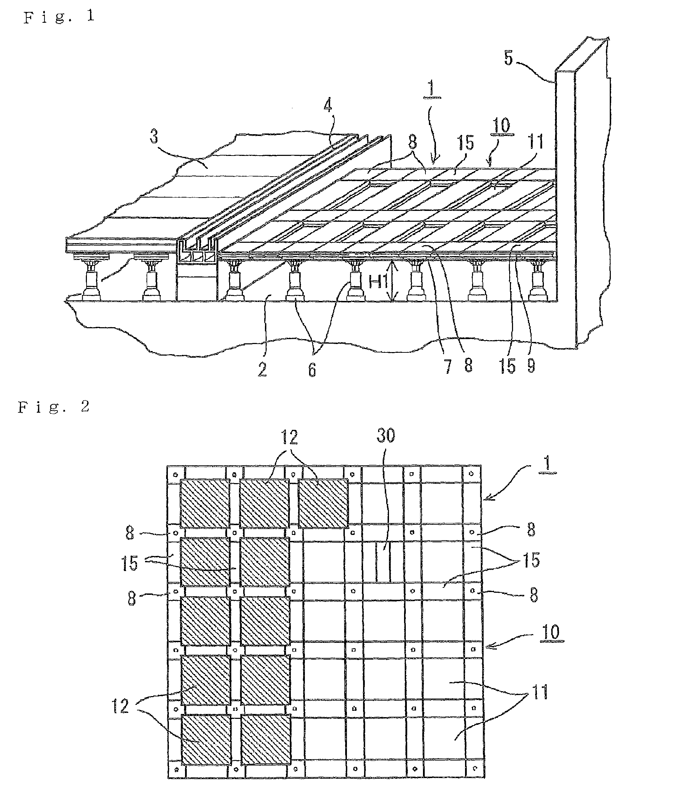

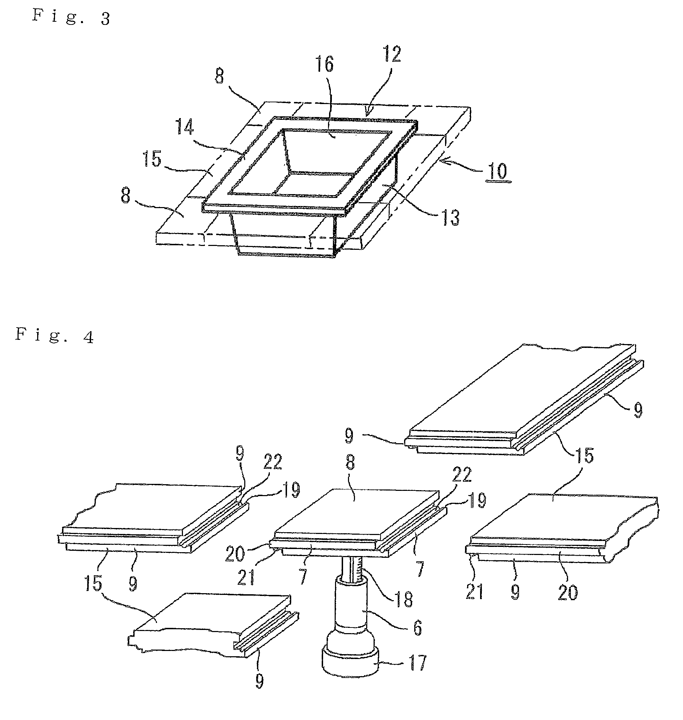

FIGS. 1 to 7 illustrate one embodiment of a planter support frame apparatus 1 of the present invention. FIG. 1 is a schematic perspective view illustrating an example in which the planter support frame apparatus 1 is installed on a support substrate 2 such as a balcony of a building. FIG. 2 is a schematic plan view schematically illustrating only the planter support frame apparatus 1 of FIG. 1 in plan view. FIG. 3 is a schematic perspective view illustrating an example of a planter. A sill 4 such as an aluminum sash is provided between a floor 3 and the support substrate 2 of the building, and a slightly-lower outside of the sill 4 corresponds to a floor of the balcony, that is, as the support substrate 2. A balustrade 5 is provided upright from an edge portion of the support substrate 2. In the illustration as an example, the planter support frame apparatus 1 is arranged on the support substrate 2 as a floor between the sill 4 and the balustrade 5.

The planter support frame apparatus 1 includes a plurality of support bars 6 arranged on the support substrate 2, which is a balcony in this example, flat-plate-like support plate members 8 provided on the support bars 6 at a height position H1 of being separated from the support substrate 2 and each having fitting-subject coupling portions 7 on side surfaces thereof, and couplingmembers 15. Eachof the couplingmembers 15 includes fitting coupling portions 9 provided on both ends thereof and detachably fitted to the fitting-subject coupling portions 7 of the support plate members 8, and couples the support plate members 8 to each other at the height position H1 so as to support the support plate members 8 in a horizontal direction. The coupling members 15 form at least one support frame body 10 together with the support plate members 8, and accommodate a planter body 13 of the planter 12 as illustrated in FIG. 3 in a support space 11 formed amid the coupling members 15 and the support plate members 8 so as to support a support flange 14 of the planter 12. As illustrated in the figures, the support frame body 10 is capable of forming an assembly in which a plurality of support frame bodies 10 are continuously arranged and coupled to each other in rows and columns.

FIG. 3 illustrates an example of the planter 12 that can be supported by the planter support frame apparatus 1. The planter 12 is formed of the planter body 13 having an opening 16 formed in a top surface thereof and a shape of a rectangular-parallelepiped box, and the support flange 14 provided to the opening 16 around the entire of an outer peripheral portion of the planter body 13. Commercially available ones may be used as the planter 12. The planter 12 is supported in such a manner that the planter body 13 thereof is accommodated in the support space 11 of the support frame body 10, and the support flange 14 thereof is supported from below by the support plate members 8 and the coupling members 15.

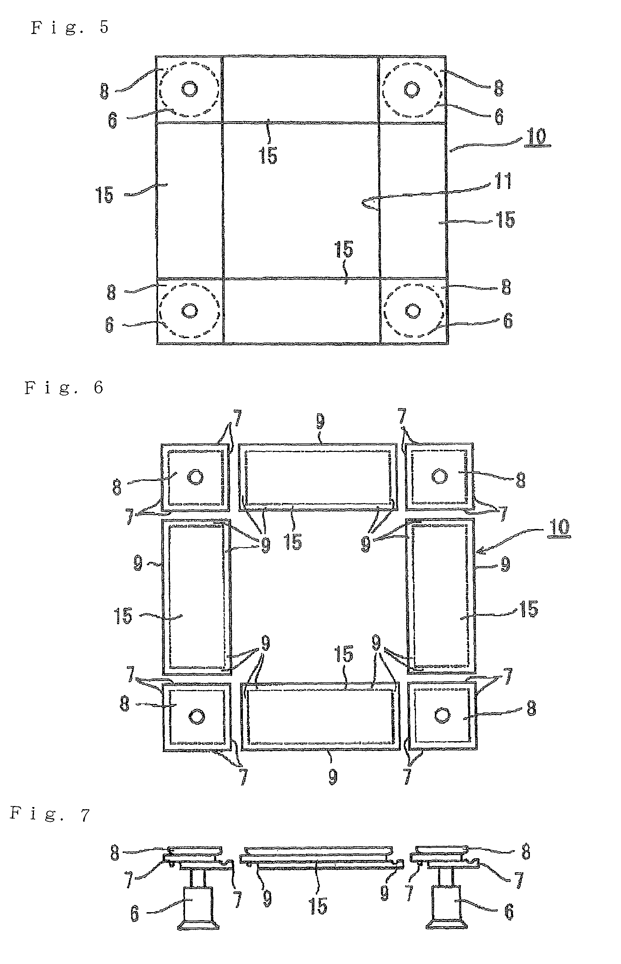

FIG. 4 is a perspective view illustrating an example of the support bars 6, the support plate members 8, and the coupling members 15 of the planter support frame apparatus 1. FIGS. 5 to 7 each illustrates one of the support frame bodies 10 each supported by the support bars 6 illustrated in FIG. 4 and formed of the support plate members 8 and the coupling members 15.

Each of the support bars 6 includes a pedestal 17 formed of a vibration-proof elastic body such as rubber, and a bolt 18 threadedly engaged with the pedestal 17, with which height adjustment can be performed. The support plate member 8 is threadedly engaged with a screw portion of an upper end portion of the bolt 18, or connectable with an extending joint. In this way, a height position of the support plate member 8 can be adjusted.

In the illustration as an example, the support plate member 8 is a square flat plate, and provided with the fitting-subject coupling portions 7 on respective four side surfaces thereof. The fitting coupling portions 9 of the coupling members 15 can be selectively and detachably coupled by fitting to the fitting-subject coupling portions 7. In the illustration as an example, the fitting-subject coupling portions 7 of the support plate member 8 and the fitting coupling portions 9 of the coupling members 15 form joints each obtained by combining a step portion 19 and a jetty portion 20 with each other so that a protruding portion 21 and a recessed portion 22 provided between the step portion 19 and the jetty portion 20 are fitted to each other. Although not shown, the fitting-subject coupling portions 7 and the fitting coupling portions 9 may form a detachable fitting joint structure formed, for example, of the following combinations: a protrusion and a recessed portion; a pin and a pin hole; a tenon and a mortise; and a step portion and a jetty portion.

Each of the coupling members 15 is a rectangular-planar plate member, and similarly to the support plate member 8, provided with the fitting coupling portions 9 each having a structure corresponding to the fitting-subject coupling portion 7 of the support plate member 8 on respective four side surfaces thereof. A width of the support plate member 8 and a width of the coupling member 15 are set to be substantially equal to each other. With such a fitting joint structure, a large number of support plate members 8 and a large number of coupling members 15 can be combined and coupled to each other so as to form the assembly structure in which, as illustrated in FIGS. 1 and 2, a large number of support frame bodies 10 are arrayed vertically and horizontally, that is, arranged in rows and columns.

FIG. 5 illustrates selected one of the support frame bodies 10 described above in a planar shape. In the support frame body 10, four support plate members 8 each arranged at a position corresponding to a corner of a square shape are coupled to each other so as to form four sides of the square shape and to be supported in the horizontal direction, and the coupling members 15 form, together with the support plate members 8, the support space 11 having a square planer shape substantially corresponding to a planar shape of the planter body 13 of the planter 12 amid the coupling members 15 and the support plate members 8. In the support space 11, the planter body 13 of the planter 12 can be accommodated and horizontally held, and the support flange 14 can be supported from below by the support plate members 8 and the coupling members 15.

FIG. 6 is an exploded view illustrating relations between individual components forming the support frame body 10 of FIG. 5, and FIG. 7 illustrates the support frame body 10 of FIG. 6 together with the support bars 6.

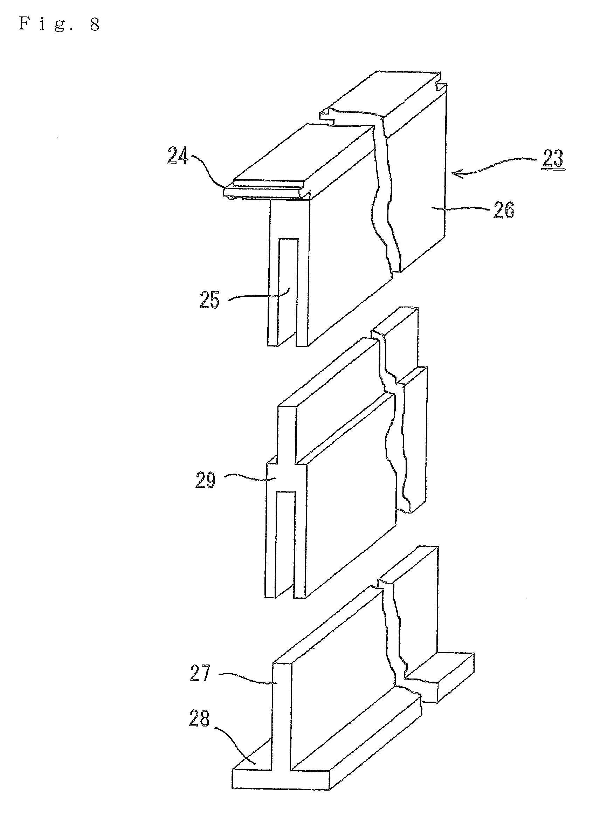

FIG. 8 illustrates a protective wall, that is, a riser 23 for shielding, from an outside so as to prevent intrusion of foreign matter, a space below the support frame body 10 stepped by being lifted up by the support bars 6. It is desired that the riser 23 be used together with the support frame body 10 when four sides of the space below the support frame body 10 are not surrounded and closed by sills, balustrades, walls, or the like, for example, in the planter support frame apparatus 1 illustrated in FIG. 1. Further, when the support frame bodies 10 are arranged at two positions of different heights, an opening or a space is formed, which corresponds to a step between the support frame bodies 10 having two levels. Therefore, the riser 23 can also be used for shielding the space from the outside.

The riser 23 illustrated in FIG. 8 includes a coupling portion 24 having a shape conforming to coupling by fitting to any one of the fitting-subject coupling portions 7 of the support plate member 8 and the fitting coupling portions 9 of the coupling member 15, a wall portion 26 provided downward from the coupling portion 24 and provided with a slit 25 from a lower edge thereof, and a base 28 including an upright portion 27 which slidably enters the slit 25 of the wall portion 26, the fitting-subject coupling portions 7 and the fitting coupling portions 9 appearing on edge portions of the support frame body 10. The riser 23 further includes an extension part 29 to be inserted between the wall portion 26 and the base 28 in case where a height of a space required to be protected is high, the extension part 29 being usable when necessary. It is desired that the riser 23 be divided by an appropriate length in a longitudinal direction (horizontal direction) and capable of being detachably coupled by fitting to the fitting-subject coupling portions 7 and the fitting coupling portions 9 similar to those illustrated in FIG. 4.

For example, in the planter support frame apparatus 1 illustrated in FIG. 2, a support frame body 10 of the large number of support frame bodies 10, which is second-uppermost and second-rightmost, is free from the planter 12. Instead, a plate member 30 closes the support space 11. The plate member 30 is provided with the fitting coupling portions 9 on surrounding side surfaces thereof correspondingly to the fitting-subject coupling portions 7, and the fitting coupling portions can be coupled by fitting during assembly so that a top surface of the plate member 30 is flush with the top surface of the support frame body 10. The plate member 30 may include a plate body which is held in the support space 11 of the support frame body 10 and free from an opening portion, and a flange portion which is similar to that of the planter 12 and put on the support frame body 10 so as to be supported. In this way, when at least one of the planters 12 is replaced with the plate member 30, there is provided a boarded part at which the planter 12 is not installed. The boarded part can be used as a space for placing a chair or a table, and demands for design can be satisfied.

According to the planter support frame apparatus 1 as described above, the support bars 6 are independently provided, which leads to the following advantages: even when the support substrate 2 has projections and recesses, inclinations, or steps, height differences can be balanced out by heights of the support bars; a planar shape of the planter support frame apparatus 1 can be freely set by selectively coupling the support frame bodies 10; and strength of each of the support frame bodies 10 can be appropriately set. Thus, with a simple structure, planters can be reliably supported on support platforms of various types, and a surface of the support platform can be substantially completely covered irrespective of the planar shape of the surface, and it is possible to form a green-planted artificial ground onto which people can step.

### Second embodiment

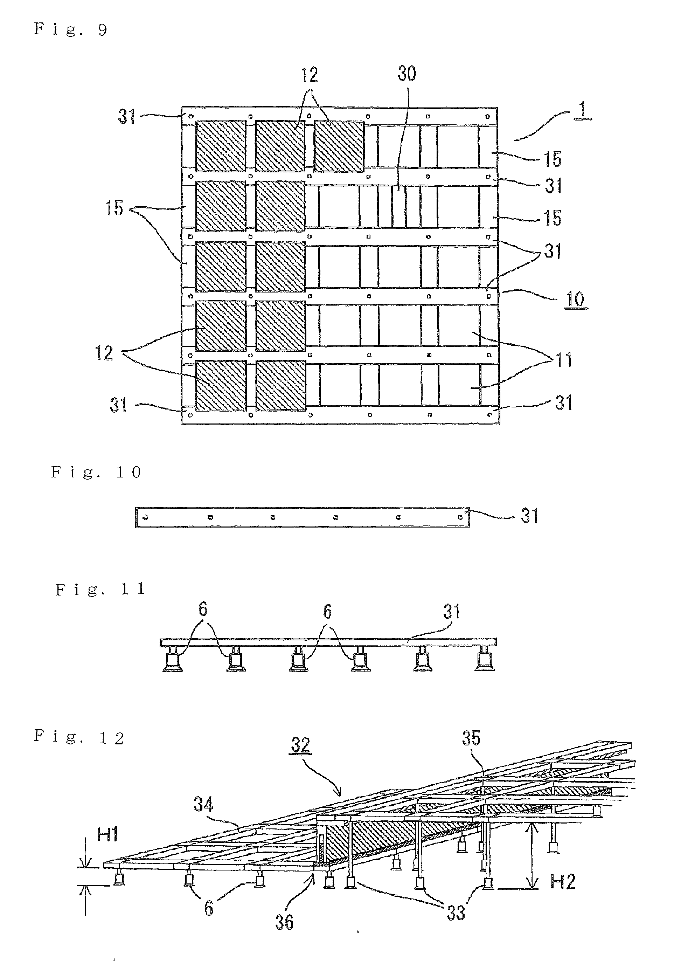

In the planter support frame apparatus 1 illustrated in FIGS. 9 to 11, support plate members 31 supported at a predetermined height above the support substrate 2 by the support bars 6 and coupling the coupling members 15 by fitting are each a long member provided across the plurality of support bars 6. With respect to each of the support plate members 31, six support bars 6 are provided at equal intervals, and the fitting-subject coupling portions 7 are continuously provided on both long-side side surfaces and short-side side surfaces. The fitting-subject coupling portions 7 of each of the support plate members 31 are continuous with the long-side side surfaces. It may be said that, because the fitting-subject coupling portions 7 of the each of the support plate members 31 are provided continuously on the long-side side surfaces, the fitting-subject coupling portions 7 are provided correspondingly to the plurality of support bars 6 so that the coupling members 15 are selectively coupled by fitting to the fitting-subject coupling portions 7. When necessary, the coupling member 15 can be coupled by fitting also to the fitting-subject coupling portion 7 at a part between the support bar 6 and the support bar 6.

Even with use of the support plate members 31 each formed of the long member as described above, it is possible to form an assembly in which the large number of support frame bodies 10 are arrayed and arranged, and to put the planter 12 as illustrated in FIG. 3 into each of the support frame bodies 10.

### Third embodiment

In addition to the group of support frame bodies 10 each formed of the support plate members 8 supported on the support substrate 2 by the large number of support bars 6 each having a predetermined length, formed of the coupling members 15 supported by the support plate members 8, and positioned at the same height position H1, a planter support frame apparatus 32 illustrated in FIG. 12 further includes another group of support frame bodies 10 each supported at a height position H2 higher than that of the support frame bodies 10 by support bars 33 longer than the support bars 6. In other words, in the planter support frame apparatus 1, the large number of support frame bodies 10 are separated into a first support-frame-body assembly 34 which is supported by the support bars 6 and arranged at the first height H1 and a second support-frame-body assembly 35 which is supported by the support bars 33 longer than the support bars 6 and arranged at the second height H2.

A step is formed between the first support-frame-body assembly 34 and the second support-frame-body assembly 35, and a space is formed thereat. For the space, there is provided a riser 36 for shielding the space between the first support-frame-body assembly 34 and the second support-frame-body assembly 35 from the outside. The riser 21 illustrated in FIG. 8 can be used as the riser 36.

### Fourth embodiment

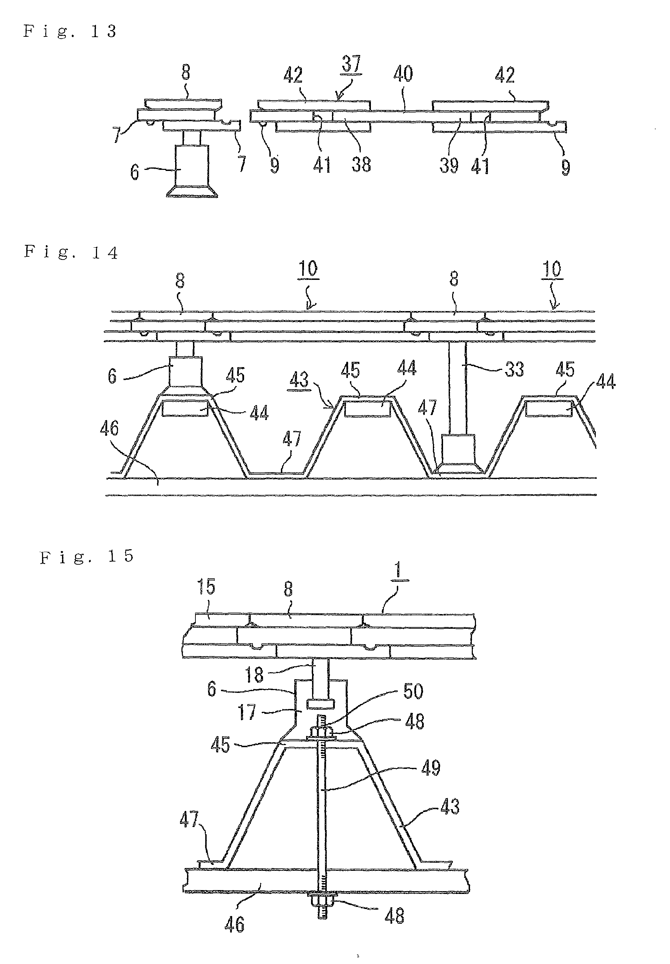

FIG. 13 is a side view of a coupling member 37 adjustable in length so that dimensions of the planter support frame apparatus 1 or 32 are arbitrarily set in row and column directions. The coupling member 37 includes a slide plate 40 having both ends 38 and 39, and two fitting parts 42 slidably provided by being fitted, in the longitudinal direction, respectively to both the ends 38 and 39 of the slide plate 40 through slits 41, and respectively having the fitting coupling portions 9 capable of being coupled by fitting to the support plate members 8. Other structural details are the same as those, for example, of the above-mentioned coupling members 15. When the slide plate 40 is placed at an appropriate position within the slits 41 of the fitting parts 42, a length of the coupling member 37 can be adjusted. When the coupling member 37 having such a length adjustment mechanism is used instead of the coupling members 15 illustrated in FIG. 4, dimensions other than the dimensions determined by combination of the support plate members 8 and the coupling members 15 can be sufficiently dealt with.

### Fifth embodiment

FIG. 14 illustrates an example in which the planter support frame apparatus 1 is installed on a folded-plate roof 43. Depending on dimensions of the folded-plate roof 43, in some cases, the support bars 6 of the planter support frame apparatus 1 cannot be installed only on peak portions 45 or only on groove portions 47. In this context, in the planter support frame apparatus 1, a left support bar 6 in FIG. 14 is the same as the support bar 6 of FIG. 12, and installed with an adhesive on the peak portion 45 supported by a structural material 44 of the folded-plate roof 43. Further, a right support bar 33 of FIG. 13 is the same as the support bar 33 of FIG. 12, which is longer, and installed with an adhesive on the peak portion 45 supported by a structural material 46 of the folded-plate roof 43.

### Sixth embodiment

The support bar 6 of the planter support frame apparatus 1 illustrated in FIG. 15 is installed on the peak portion 45 of the folded-plate roof 43 on the structural material 46. The folded-plate roof 43 is coupled to the structural material 46 with a bolt 49 passing through the structural material 46 and the peak portion 45 and fastened with nuts 48, and the upper nut 48 and the bolt 49 project beyond a top surface of the peak portion 45. Meanwhile, on a bottom surface of the pedestal 17 of the support bar 6 coupled to the support plate member 8, there is provided a fitting recessed portion 50 for accommodating the nut 48 and the bolt 49 which are projecting portions of the support substrate 2. The fitting recessed portion 50 and the nut 48 as well as the bolt 49 are fitted to each other so that the support bar 6 is fixed to the folded-plate roof 43. When the pedestal 17 is formed of an elastic body such as rubber or plastic, more reliably can be achieved when fitting is performed.

### Seventh embodiment

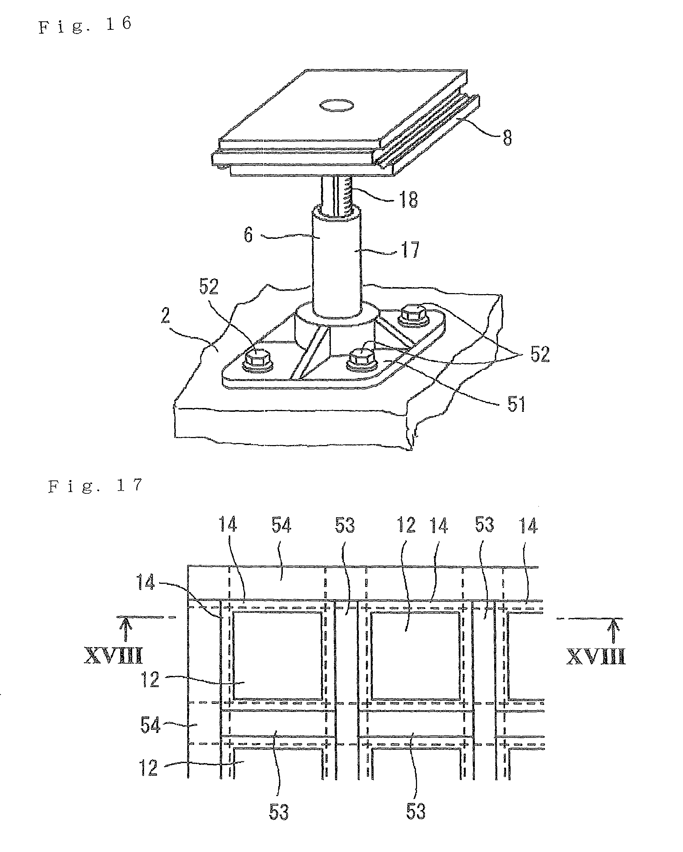

The pedestal 17 of the support bar 6 illustrated in FIG. 16 includes a flange 51 so as to be fixed with bolts 52 to the support substrate 2. Anchor bolts, concrete nails, and the like may be used instead of the bolts 52.

### Eighth embodiment

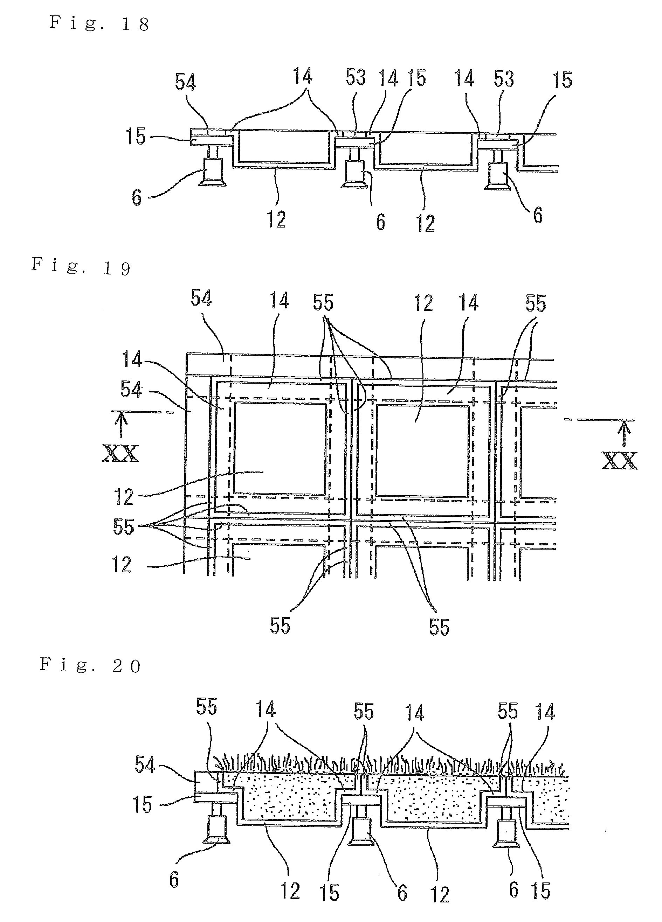

In the planter support frame apparatus illustrated in FIGS. 17 and 18, on each of the support frame bodies 10 supported by the support bars 6, the planter 12 illustrated in FIG. 3 is supported by the support flange 14. Gaps between the support flanges 14 of the respective planters 12 are buried by spacers 53 combined with each other in matrix so that step are not formed on a top surface of the planter support frame apparatus 1. Frameworks 54 are provided on edge portions of the planter support frame apparatus 1. In the illustration as an example, although the spacers 53 are formed by combination in matrix of long members arranged parallel to each other and short members arranged therebetween, the long members and the short members may be combined in matrix with each other in any form.

### Ninth embodiment

The support flange 14 of each of the planters 12 supported by the planter support frame apparatus illustrated in FIGS. 19 and 20, which extends in the horizontal direction from the planter body 13 and is supported by the support frame body 10, includes an upright portion 55 provided over an outer edge portion. Horizontal position of the upright portion 55, that is, a width dimension of the support flange 14 is set such that an outer surface of the upright portion 55 is positioned on a center line in a longitudinal direction of each of the coupling members 15 for supporting the support flange 14.

Accordingly, under a state in which each of the planters 12 is supported by the support frame body 10, the upright portions 55 of the adjacent planters 12 are held in contact with each other. With provision of such upright portions 55, a part of the planter 12 in which a plant can be cultured is expanded onto the support frame body 10, and a state is achieved in which the planters 12 are separated from each other only by a thickness corresponding to two upright portions 55. Thus, for example, when a lawn 56 is planted in each of the planters 12, a state can be achieved in which the lawns are planted almost seamlessly and substantially all over. The planters 12 may be arranged with a gap being provided between the upright portions 55 of the adjacent planters 12 depending on a situation.

The planter support frame apparatuses described hereinabove with reference to the figures merely represent examples of an embodiment mode of the present invention. Thus, various modifications may be made thereto, and features of the embodiment modes may be used all together or in selective combination. For example, the fitting coupling portions 9 as illustrated in FIG. 4 may be provided on side edges of the support flange 14 of the planter so as to be coupled by fitting to the fitting-subject coupling portions 7 on a support-frame-body-10 side. Further, the heights of the support bars 6 may be independently selected, and the heights of the support bars 6 themselves can be adjusted with screws or the extending joints. Thus, the support bars 6 are applicable not only to the illustrated flat support substrate 2, but also to a rocky stretch, a stepped or inclined platform, and a projection-recess support substrate such as a folded-plate roof. In addition, the support substrate itself may be a structural object or a natural object such as a balcony, a deck, a rooftop, a roof, a concrete panel, a bedrock, and a rocky stretch.

The apparatuses described hereinabove with reference to the figures are merely examples, and hence various modifications may be made thereto. Further, the features of the specific examples may be used all together or in selective combination.

### Industrial Applicability

The planter support frame apparatus according to the present invention is applicable to rooftop greening, a balcony vegetable garden, a greened artificial ground, and the like.

### Reference Signs List

1, 32 planter support frame apparatus, 2 support substrate, 6 support bar, 7 fitting-subject coupling portion, 8, 31 support plate member, 9 fitting coupling portion, 10 support frame body, 11 support space, 12 planter, 13 planter body, 14 support flange, 15 coupling member, 20 jetty portion, 21 protruding portion, 22 recessed portion, 23, 36 riser, 30 plate member, 33 support bar, 34 first support-frame-body assembly, 35 second support-frame-body assembly, 37 coupling member, 38, 39 end, 40 slide plate, 42 fitting part, 43 folded-plate roof, 44 structural material, 45 peak portion, 46structuralmaterial, 47 groove portion, 48nut, 49bolt, 50 recessed portion, 51 flange, 52 fastener, 53 spacer, 54 framework, 55 upright portion, 56 lawn.

## Claims

1. A planter support frame apparatus for accommodating and holding planters each having a support flange provided to an outer peripheral portion of a planter body, the planter support frame apparatus comprising:
a plurality of support bars arranged on a support substrate;
flat-plate-like support plate members provided on the plurality of support bars at a height position of being separated from the support substrate, and each comprising fitting-subject coupling portions on side surfaces of each of the flat-plate-like support plate members; and
couplingmembers each comprising, at both ends thereof, fitting coupling portions detachably fitted to the fitting-subject coupling portions of the flat-plate-like support plate members, the coupling members coupling the flat-plate-like support plate members to each other at the height position so as to support the flat-plate-like support plate members in a horizontal direction, the coupling members forming at least one support frame body together with the flat-plate-like support plate members, the coupling members supporting the support flange of each of the planters by accommodating the planter body in a support space formed amid the coupling members and the flat-plate-like support plate members,
wherein the at least one support frame body comprises a plurality of support frame bodies capable of being continuously arranged in rows and columns.

2. A planter support frame apparatus according to claim 1,
wherein the flat-plate-like support plate members are provided respectively on the plurality of support bars,
wherein a planar shape of each of the flat-plate-like support plate members comprises a square shape,
wherein the fitting-subject coupling portions are respectively provided on all of the four side surfaces, and
wherein the coupling members are capable of being selectively coupled by fitting to the fitting-subject coupling portions.

3. A planter support frame apparatus according to claim 1 or 2, wherein a width of each of the support plate members and a width of each of the coupling members are substantially equal to each other.

4. A planter support frame apparatus according to any one of claims 1 to 3, wherein the fitting-subject coupling portions of each of the flat-plate-like support plate members and the fitting coupling portions of each of the coupling members form joints each obtained by combining a step portion and a jetty portion with each other so that a protruding portion and a recessed portion provided between the step portion and the jetty portion are elastically fitted to each other.

5. A planter support frame apparatus according to claim 1,
wherein each of the flat-plate-like support plate members comprises a long member provided on the plurality of support bars and across the plurality of support bars.

6. A planter support frame apparatus according to claim 5,
wherein the fitting-subject coupling portions of each of the flat-plate-like support plate members are provided correspondingly to the plurality of support bars, and
wherein the coupling members are capable of being selectively coupled by fitting to the fitting-subject coupling portions.

7. A planter support frame apparatus according to any one of claims 1 to 6, wherein a planar shape of the support space substantially conforms to a planar shape of the planter body.

8. A planter support frame apparatus according to any one of claims 1 to 7, wherein the flat-plate-like support plate members are provided so as to be adjustable in height.

9. A planter support frame apparatus according to any one of claims 1 to 8, wherein each of the plurality of support bars comprises an extending joint so as to be adjustable in height.

10. A planter support frame apparatus according to any one of claims 1 to 9, wherein each of the plurality of support bars comprises:
a pedestal formed of an elastic body and placed on the support substrate; and
a bolt supported by the pedestal and comprising a threaded portion at an upper end portion of the bolt so that the bolt is threadedly engaged with corresponding one of the flat-plate-like support plate members.

11. A planter support frame apparatus according to any one of claims 1 to 10, wherein the fitting-subject coupling portions and the fitting coupling portions form structures each having a combination of a protrusion and a recessed portion, a combination of a pin and a pin hole, a combination of a tenon and a mortise, or a combination of a step portion and a jetty portion.

12. A planter support frame apparatus according to any one of claims 1 to 11, further comprising a riser for shielding a space below the at least one support frame body from an outside.

13. A planter support frame apparatus according to any one of claims 1 to 12, further comprising:
a first support-frame-body assembly formed of the plurality of support frame bodies supported by the plurality of support bars; and
a second support-frame-body assembly formed of support frame bodies supported at a position higher than a height position of the first support-frame-body assembly by other support bars longer than the plurality of support bars.

14. A planter support frame apparatus according to claim 13, further comprising a riser for shielding a space between the first support-frame-body assembly and the second support-frame-body assembly from an outside.

15. A planter support frame apparatus according to any one of claims 1 to 14, wherein at least one of the planters is replaced with a plate member.

16. A planter support frame apparatus according to any one of claims 1 to 15, wherein the support substrate comprises a balcony, a deck, a rooftop, a roof, a concrete panel, a bedrock, and gravel.

17. A planter support frame apparatus according to any one of claims 1 to 16, wherein each of the coupling members comprises:
a slide plate having both ends; and
two fitting portions slidably provided by being fitted, in a longitudinal direction, respectively to both the end of the slide plate through slits, and respectively having fitting coupling portions capable of being coupled by fitting to the flat-plate-like support plate members.

18. A planter support frame apparatus according to any one of claims 1 to 17, wherein fixation of the plurality of support bars with respect to the support substrate is performed with at least one of fasteners, adhesive, and fitting to projecting portions of the support substrate.

19. A planter support frame apparatus according to any one of claims 1 to 18, wherein gaps between the support flanges of the planters are buried by spacers combined with each other in matrix.

20. A planter support frame apparatus according to any one of claims 1 to 19, wherein the support flange of each of the planters, which extends in the horizontal direction from the planter body and is supported by the at least one support frame body, comprises an upright portion provided over an outer edge portion.
